# EUROPEAN PATENT SPECIFICATION

(11) **EP 2 345 757 B1**
(45) Date of publication and mention of the grant of the patent: **19.06.2013**
(21) Application number: 09815850.4
(22) Date of filing: 15.09.2009
(51) Int. Cl.: D06F 25/00, D06F 33/02, D06F 37/30, D06F 58/28

(54) **DRUM TYPE WASHING MACHINE**
TROMMELWASCHMASCHINE
MACHINE À LAVER DE TYPE À TAMBOUR

(30) Priority: 29.09.2008 JP 2008250985
(43) Date of publication of application: 20.07.2011
(73) Proprietor: Panasonic Corporation, Kadoma-shi Osaka 571-8501 (JP)
(72) Inventor: HATANAKA, Souichi, Osaka 540-6207 (JP); TOMITA, Kenjiro, Osaka 540-6207 (JP); HAGIWARA, Hisashi, Osaka 540-6207 (JP)
(74) Representative: Schwabe - Sandmair - Marx
(86) International application number: PCT/JP2009/004608
(87) International publication number: WO 2010/035428

(56) References cited:
- EP-A2- 0 947 622
- EP-A2- 1 750 362
- JP-A- 2000 024 366
- JP-A- 2006 174 689
- JP-A- 2006 174 689
- JP-A- 2007 068 869
- US-A- 6 041 625

## Description

### Technical Field

The present invention relates to a drum type washing machine that drives a drum motor by an inverter circuit so as to drive a rotary drum accommodating laundry at a rotation speed in accordance with each process of washing, dehydrating, etc.

### Background Art

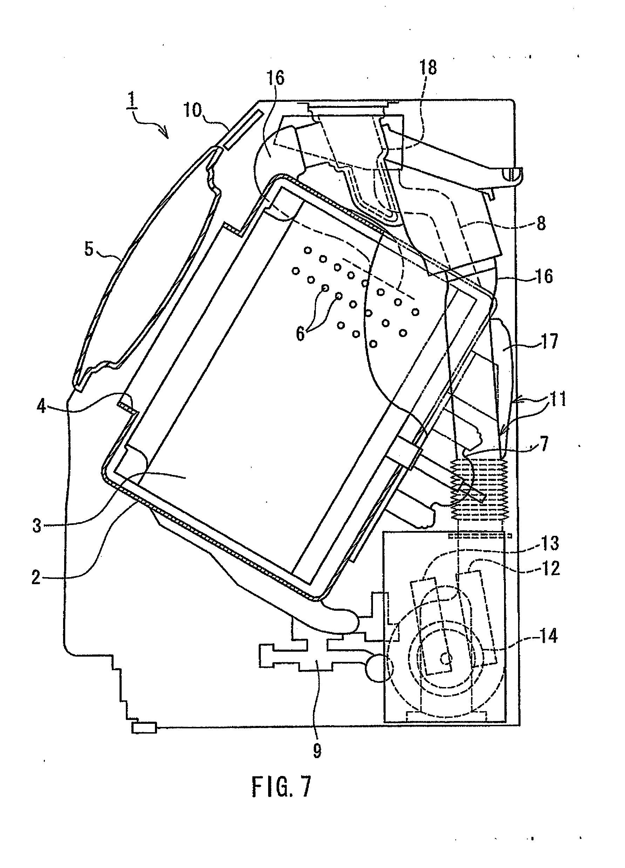

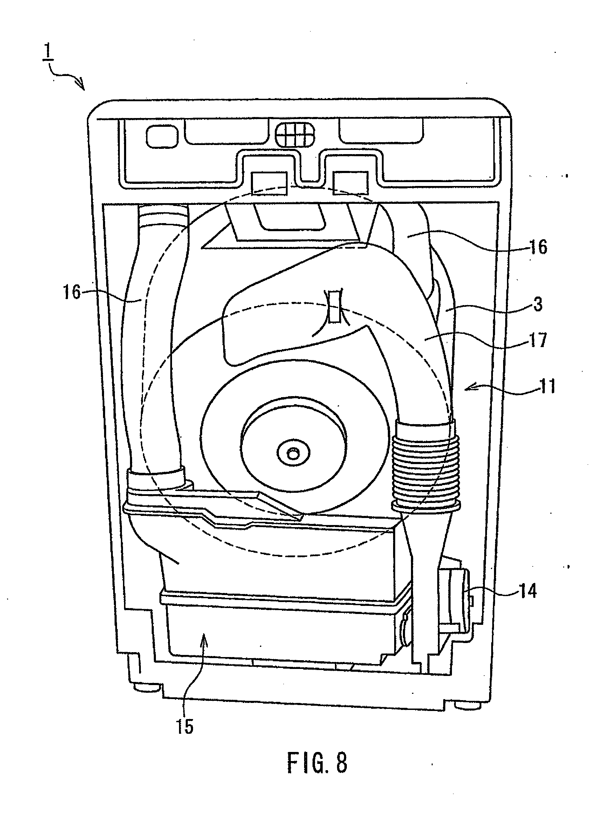

FIGS. 7 and 8 illustrate an example of a structure of a drum type washing and drying machine using a dehumidification drying system with a heat pump. FIG. 7 is a cross-sectional view illustrating a configuration of main portions of the drum type washing machine, and FIG. 8 is an internal rear view thereof.

In this washing machine, a water tank 2 is supported in a suspended state by a suspension structure (not shown) in a washing machine housing 1. In the water tank 2, a rotary drum 3 formed in a bottomed cylindrical shape is supported with a rotary axis direction thereof inclined downwardly from a front side to a rear side. On a front side of the water tank 2, a clothes inlet/outlet 4 communicating with an opening end of the rotary drum 3 is formed. By opening a door 5 attached to an opening portion provided on an upwardly inclined surface on a front surface side of the washing machine housing 1, laundry can be put in/taken out from the rotary drum 3 through the clothes inlet/outlet 4.

On a circumferential surface of the rotary drum 3, a number of through-holes 6 communicating with the inside of the water tank 2 are formed, and stirring protrusions (not shown) are provided at a plurality of positions on the inner circumferential surface. The rotary drum 3 is rotated in forward and backward directions with a drum motor 7 attached to a rear surface side of the water tank 2. Further, a water supply conduit 8 and a water drain conduit 9 are piping-connected to the water tank 2, and water supply and water drain are performed with respect to the water tank 2 under the control of a water supply valve and a water drain valve (not shown).

When the door 5 is opened and laundry and a detergent are put in the rotary drum 3, and the washing machine is started by operating an operation panel 10 provided on a front surface upper portion, for example, of the washing machine housing 1, a predetermined amount of water is supplied to the water tank 2 through the water supply conduit 8, and the rotary drum 3 is rotated by the drum motor 7 to start a washing process. Due the rotation of the rotary drum 3, a stirring operation is repeated in which the laundry accommodated in the rotary drum 3 is lifted up in a rotation direction by the stirring protrusions provided on an inner circumferential wall of the rotary drum 3 and falls from an appropriate height where the laundry had been lifted up, and hence, the laundry is subjected to striking washing to be washed.

After an elapse of a required washing time, the dirty washing liquid is drained through the water drain conduit 9, and the washing liquid contained in the laundry is removed by a dehydrating operation in which the rotary drum 3 is rotated at a high speed. After that, water is supplied to the water tank 2 through the water supply conduit 8 to perform a rinsing process. Even in the rinsing process, the laundry accommodated in the rotary drum 3 is repeatedly subjected to the stirring operation in which the laundry is lifted up by the stirring protrusions and falls due to the rotation of the rotary drum 3, and thus, rinse-washing is performed.

The drum type washing and drying machine has a function of drying the laundry accommodated in the rotary drum 3. That is, air in the water tank 2 is discharged, dehumidified, and dried by heating, and sent back to the water tank 2 through a circulation air sending duct 11. At some midpoint of the circulation air sending duct 11, a heat pump composed of dehumidification means such as an evaporator 12 and heating means such as a condenser 13, and a circulation fan 14 that is air sending means are provided. The evaporator 12 and the condenser 13 are placed in a lowest part of the circulation air sending duct 11, forming a heat exchange portion 15 with respect to circulating air, as illustrated in FIG. 8.

An air flow is generated in the circulation air sending duct 11 by rotating the circulation fan 14, and the air in the rotary drum 3 accommodating the laundry is discharged through the through-holes 6 from the water tank 2 to a circulating air introducing duct 16 that introduces the air to the circulation fan 14 side. The air is dehumidified by allowing the evaporator 12 positioned on an upstream side of the circulation fan 14 to condense water from the air and is heated by heat exchange with the condenser 13. Thus, high-temperature air that is always dry is obtained.

The high-temperature dried air is sent from the circulation fan 14 to an air sending duct 17 directed to the water tank 2 to be sent to the water tank 2. The high-temperature dried air sent to the water tank 2 enters the rotary drum 3 through the through-holes 6 to pass therethrough to the water tank 2 while the laundry such as clothes is exposed thereto, and introduced to the circulating air introducing duct 16 again. The air circulation is repeated in the circulation air sending duct 11 as described above, and thus, a drying process is performed.

In the drying process using the circulation air sending duct 11, foreign matters such as a lint generated mainly from the laundry such as clothes is mixed in the air circulating through the circulation air sending duct 11 and circulates. Such a foreign matter is likely to cause problems for carrying out the drying process, such as the clogging of the evaporator and the condenser, the engagement with a rotary portion of the circulation fan 14, and the accumulation on an inner surface of the circulation fan 14. Therefore, a filter 18 for removing a foreign matter in the circulating air is provided at some midpoint of the circulation air sending duct 11.

A motor drive device of the drum type washing and drying machine with the above-mentioned configuration uses one supply source of a DC voltage for an inverter circuit for the drum motor 7 that rotates the rotary drum 3 and an inverter circuit that drives a compressor motor for a heat pump. Therefore, during an operation of the compressor motor or during a dehydrating and drying operation in which a dehydrating operation and a heat pump drying operation are performed simultaneously, there is a possibility that an AC power supply current increases to exceed a wall outlet capacity.

Therefore, for example, Patent Document 1 discloses a control for preventing an AC power supply current from exceeding an upper limit value of a wall outlet capacity by estimating each input or output power of the drum motor and the compressor motor from each motor current during the dehydrating and drying operation, in which the power consumption of the washing and drying machine reaches a maximum power consumption. This enables a DC voltage of the inverter circuit to be supplied stably.

Further, Patent Document 2 discloses a motor drive circuit in which means for short-circuiting an AC power supply via a reactor connected in series to the AC power supply is provided between a rectifier circuit for supplying a DC voltage Vd to an inverter circuit for driving a motor and the AC power supply. The short-circuiting means performs a short-circuiting operation during a period set by a pulse width Tw of a control signal, beginning at a predetermined delay time Td from a zero-cross point of the AC power supply. The short-circuiting means improves a power factor by short-circuiting a power supply once or a plurality of times in every half-period of a power supply voltage Vs, and thus, can control the DC voltage Vd supplied to the inverter circuit to be constant while keeping the power factor of a power supply device at a maximum value even when the power supply voltage fluctuates.

### Prior Art Documents

### Patent documents

Patent Document 1: JP 2008-54811 A
Patent Document 2: JP 2004-72806 A
Patent Document 3: US 6 041 625 A
Patent Document 4: JP 2006-174 689 A

### Disclosure of Invention

### Problem to be Solved by the Invention

In order to enhance the function of a washing and drying machine, there is a demand for enhancing a maximum rotation speed from conventional 1200 min⁻¹ to 1600 min⁻¹, for example, by further speeding up the rotation of a drum motor in a dehydrating process. In this case, considering an increase in cost and saving energy, it is desired to enable a high-speed rotation without enlarging a motor.

However, in order to further speed up a rotation without enlarging a motor, it is necessary to increase supply power with respect to the motor. On the other hand, an increase in supply power involves a decrease in DC voltage to be supplied to an inverter circuit. Particularly, in a dehydrating and drying process including both a dehydrating process and a drying process, a decrease in DC source voltage becomes very large during a parallel drive period in which a drum motor and a compressor motor are driven simultaneously.

Further, in the drying process, it is desired to maintain a DC voltage so as to operate a circulation fan stably even in a situation in which a DC voltage decreases along with a decrease in source voltage and an increase in output of a compressor motor for a heat pump.

In order to avoid a decrease in DC voltage so as to maintain a DC voltage at a sufficient level and supply sufficient power to a drum motor and the like, step-up control of a DC voltage by a step-up circuit has been considered. However, in the case of using a step-up circuit, there is a possibility that a beat sound caused by switching may be generated. In order to avoid this, appropriate control corresponding to each process of washing is required. The technologies disclosed by Patent Documents 1 and 2 do not satisfy such a requirement.

Thus, an object of the present invention is to provide a drum type washing machine equipped with a motor drive device capable of stepping up a DC voltage to be supplied to an inverter circuit under appropriate conditions in accordance with the status.

### Means for Solving Problem

In order to solve the above-mentioned problem, a drum type washing machine according to claim 1 is provided. Preferred embodiments are the subject-matter of the dependent claims.

### Effects of the Invention

According to the drum washing machine of the present invention, a short-circuit signal beginning at a zero-cross detection point of an AC power supply is generated, and a pulse width Tw of the short-circuit is set based on a target voltage Vt set in accordance with a target rotation speed Nt and a detected value of a DC voltage Vd. Therefore, a DC voltage to be supplied to an inverter circuit can be stepped up under appropriate conditions in accordance with the status.

### Brief Description of Drawings

[FIG. 1] FIG. 1 is a block diagram illustrating a motor drive device of a drum type washing and drying machine in one embodiment of the present invention.
[FIG. 2] FIG. 2 is a diagram illustrating an operation at a time of short-circuit caused by a shorting circuit of the motor drive device.
[FIG. 3A] FIG. 3A is a diagram illustrating a change in a current input to a full-wave rectifier circuit by an operation of the shorting circuit of the motor drive device.
[FIG. 3B] FIG. 3B is a diagram illustrating a current input to a full-wave rectifier circuit in the case where the shorting circuit of the motor drive device is not operated.
[FIG. 4] FIG. 4 is a diagram illustrating a current input to a full-wave rectifier circuit with respect to input power when a DC voltage to be output in the motor drive device varies.
[FIG. 5] FIG. 5 is a diagram illustrating a current flowing through a smoothing capacitor with respect to input power when a DC voltage to be output in the motor drive device varies.
[FIG. 6] FIG. 6 is a diagram illustrating a setting example of a step-up operation of a DC voltage of the motor drive device.
[FIG. 7] FIG. 7 is a cross-sectional view illustrating a structure of a drum type washing and drying machine using a dehumidification drying system by a heat pump in a conventional example.
[FIG. 8] FIG. 8 is an internal rear view of the drum type washing and drying machine.

### Description of the Invention

A drum type washing machine of the present invention takes the following aspects based on the above-mentioned configuration.

Specifically, in the above-mentioned configuration, it is preferred that the drum type washing machine further includes: a drying portion having at least a compressor, performing a drying process of introducing air in the water tank through a circulation passage and dehumidifying and heating the air; a compressor motor driving the compressor; and a second inverter circuit connected in parallel to the smoothing capacitor, controlling driving of the compressor motor, wherein the control portion is configured so as to drive the second inerter circuit together with the first inverter circuit, and the control portion controls so as to operate the shorting circuit to step up the DC voltage Vd, when driving the drum motor and the compressor motor in parallel simultaneously so as to perform an operation including the dehydrating process and the drying process.

Further, the control portion is capable of controlling the pulse width Tw of the short-circuit signal so that the DC voltage Vd has a predetermined magnitude required for obtaining a target rotation speed Nt of the drum motor.

Further, in the dehydrating process, step-up control of the DC voltage Vd by the shorting circuit is not performed during a period in which the target rotation speed Nt is equal to or lower than a predetermined speed, and the step-up control of the DC voltage Vd is performed during a period after the target rotation speed Nt exceeds the predetermined speed.

Further, in a washing process, the short-circuit signal is set to be a predetermined pulse width Tw corresponding to the DC voltage Vd lower than the target voltage Vt in the dehydrating process.

The drum type washing machine further includes: a drying portion including at least a compressor, introducing air in the water tank through a circulation passage and dehumidifying and heating the air; a compressor motor driving the compressor; and a second inverter circuit connected in parallel to the smoothing capacitor, controlling driving of the compressor motor, wherein the control portion is configured so as to drive the second inverter circuit together with the first inverter circuit, and the control portion controls so as to operate the shorting circuit to step up the DC voltage Vd, when rotating the compressor motor so as to perform a drying process.

In any of the above-mentioned configurations, it is preferred that the control portion controls the pulse width Tw of the short-circuit signal to be zero when changing the drum motor or the compressor motor to a suspension state:

Further, it is preferred that the control portion lowers the target rotation speed Nt of the drum motor or the compressor motor, in a case where the DC voltage Vd cannot be stepped up in accordance the target voltage Vt or a case where the DC voltage Vd is stepped up to exceed the target voltage Vt.

Further, it is preferred that an upper limit is provided to the pulse width Tw of the short-circuit signal, and the step-up control is continued by limiting the pulse width Tw to the upper limit or less even when the DC voltage Vd has not reached the target voltage Vt.

Hereinafter, one embodiment of the present invention will be described with reference to the drawings.

### (Embodiment)

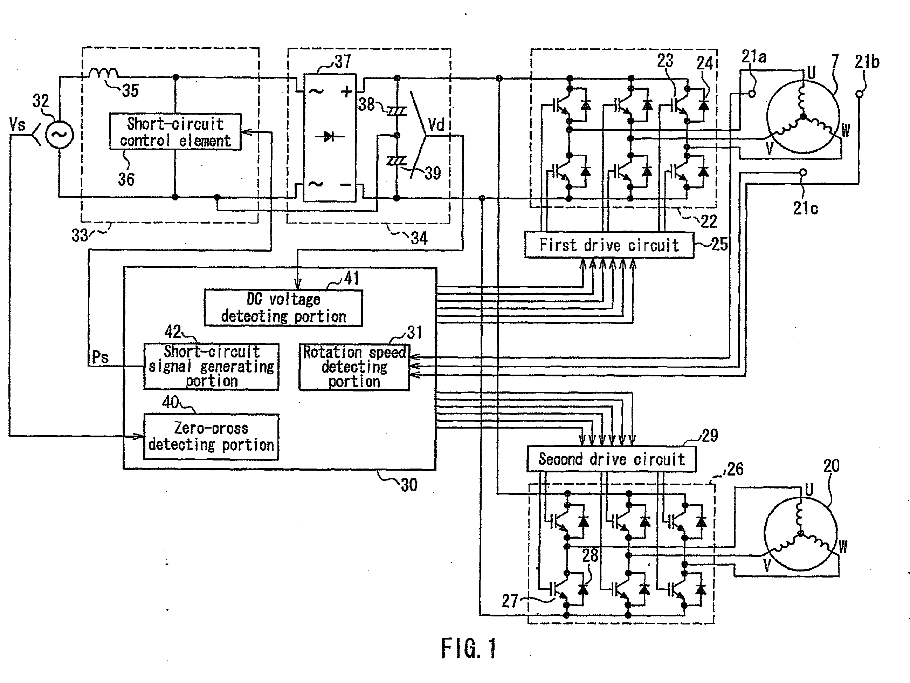

FIG. 1 is a block diagram illustrating a motor drive device of a drum type washing and drying machine in an embodiment of the present invention. The entire structure of the drum type washing and drying machine in the present embodiment is the same as that illustrated in FIGS. 7 and 8.

The motor drive device of FIG. 1 has a function of controlling the drive of a drum motor 7, a fan motor for driving a circulation fan 14 (see FIG. 7), and a compressor motor for a heat exchange portion 15 (see FIG. 8). However, FIG. 1 illustrates only portions related to the drive of the drum motor 7 and the compressor motor 20. The drum motor 7 and the compressor motor 20 respectively are permanent magnet synchronous motors equipped with a stator having a three-phase winding and a rotor having a bipolar permanent magnet.

The drum motor 7 has three rotor position detecting elements 21a, 21b, 21c detecting a rotor position. The rotor position detecting elements 21a-21c output rotor position signals at every 60 electrical degree corresponding to rotor magnetic pole positions. The drum motor 7 is rotated by a first inverter circuit 22. The first inverter circuit 22 is configured in such a manner that 6 switching elements 23 are three-phase-bridge -connected, and flywheel diodes 24 are connected in parallel to the respective switching elements 23. The ON/OFF of each switching element 23 is PWM-controlled by a first drive circuit 25.

On the other hand, the compressor motor 20 is rotated by a second inverter circuit 26. The compressor motor 20 has no rotor position detecting elements and is sine-wave driven with a position sensorless control based on a signal from current detecting means. The second inverter circuit 26 is configured in such a manner that six switching elements 27 are three-phase-bridge-connected in the same way as in the first inverter circuit 22, and flywheel diodes 28 are connected in parallel to the respective switching elements 27. The on/off state of each switching element 27 is PWM-controlled by a second drive circuit 29.

Actually, the motor drive device also is provided with a third inverter circuit and a third drive circuit for driving a fan motor for a circulation fan 14. However, the configuration and operation of the third inverter circuit and the third drive circuit are similar to those of the second inverter circuit 26 and the second drive circuit, and hence, the illustration and description thereof are omitted.

The first drive circuit 25 and the second drive circuit 29 are operated in response to the control by a control portion 30. The control portion 30 receives rotor position signals output by the rotor position detecting elements 21a-21c of the drum motor 7. When the first drive circuit 25 performs PWM control with respect to the ON/OFF state of each switching element 23 based on the rotor position signal, the current supply with respect to the three-phase winding of the stator of the drum motor 7 is controlled, and the rotor is rotated synchronously. The control portion 30 further has a rotation speed detecting portion 31 that detects the rotation speed of the rotor, i.e., a rotation speed Nd of the drum motor 7, based on the rotor position signals from the three rotor position detecting elements 21a-21c. Every time the states of the three rotor position signals change, the rotation speed detecting portion 31 detects a period thereof, and calculates the rotation speed Nd of the drum motor 7 from the period.

Power is supplied to the first and second inverter circuits 22, 26 by an AC power supply 32, a shorting circuit 33, and a rectifying portion 34. That is, the shorting circuit 33 and the rectifying portion 34 generate a DC voltage Vd from an AC voltage Vs supplied from the AC power supply 32, and the DC voltage Vd is applied to the first and second inverter circuits 22, 26.

The shorting circuit 33 is composed of a reactor 35 connected in series between the AC power supply 32 and the rectifying portion 34, and a short-circuit control element 36 connected in parallel to the AC power supply 32 via the reactor 35. The short-circuit control element 36 can be composed of, for example, a diode bridge and an IGBT, or a power semiconductor switching element such as a bipolar transistor or a MOSFET.

The rectifying portion 34 has the full-wave rectifier circuit 37, and a series circuit of smoothing capacitors 38, 39 are connected in parallel to the full-wave rectifier circuit 37. The DC voltage Vd between both ends of the smoothing capacitors 38, 39 is applied to the first inverter circuit 22 and the second inverter circuit 26, and DC power is converted to three-phase AC power to be supplied to the drum motor 7 and the compressor motor 20.

Further, a zero-cross detecting portion 40 is provided and receives AC voltages at both ends of the AC power supply 32. The zero-cross detecting portion 40 outputs a zero-cross detection signal that switches from a High signal to a Low signal or from a Low signal to a High signal at a timing when the AC voltage Vs passes through a zero-cross point to have its polarity changed, and supplies the zero-detection signal to the control portion 30.

The control portion 30 also includes a DC voltage detecting portion 41 that detects the DC voltage Vd between both ends of the smoothing capacitors 38, 39, that is the DC voltage Vd to be applied to the first and second inverter circuits 22, 26. Further, the control portion 30 includes a short-circuit signal generating portion 42, and generates a short-circuit signal Ps for controlling the short-circuit control element 36 of the shorting circuit 33 to be conductive at least during part of the period of the dehydrating process.

The motor drive device having the above-mentioned configuration is characterized in the operation of the shorting circuit 33. The shorting circuit 33 short-circuits the AC voltage Vs via the reactor 35 when the short-circuit control element 36 is conductive. In the short-circuit state, power of the AC voltage Vs is accumulated in the reactor 35, and when the short-circuit control element 36 is turned off, the accumulated power is supplied to the rectifying portion 34. The supplied power is converted to a DC current by the full-wave rectifier circuit 37 to charge the smoothing capacitors 38, 39 to step up an output DC voltage Vd.

In order to perform a step-up operation effectively, the short-circuit signal generating portion 42 of the control portion 30 generates a short-circuit signal Ps for each half-period of the power supply voltage Vs, beginning at a zero-cross detection point detected by the zero-cross detecting portion 40. Further, the target voltage Vt with respect to the DC voltage Vd is set in accordance with the target rotation speed Nt of the drum motor 7, and the pulse width Tw of the short-circuit signal Ps is set based on the target voltage Vt and detected values of the DC voltage Vd. For example, the pulse width Tw is controlled so that the DC voltage Vd to be detected has a certain magnitude required for obtaining the target rotation speed Nt of the drum motor 7.

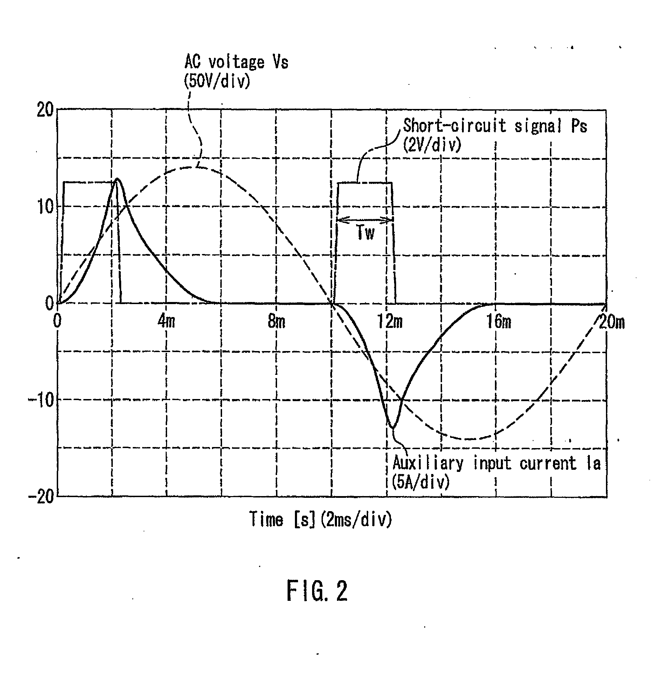

FIG. 2 illustrates an example of the operation of the shorting circuit 33. The short-circuit signal Ps with the pulse width Tw is generated for each half-period, beginning at a zero-cross detection point of the voltage Vs of the AC power supply 32. The short-circuit control element 36 is made conductive to allow a short-circuit current caused by the AC voltage Vs to flow therethrough during a high period of the short-circuit signal Ps, and power is accumulated in the reactor 35. When the short-circuit signal Ps becomes low, an auxiliary input current Ia based on the power accumulated in the reactor 35 flows to the full-wave rectifying circuit 37. The auxiliary input current Ia is superimposed on a current caused by the AC voltage Vs to form an input current to the full-wave rectifying circuit 37. By superimposing the auxiliary input current Ia on the current caused by the AC voltage Vs, the DC voltages Vd at both ends of the smoothing capacitors 38, 39 can be stepped up.

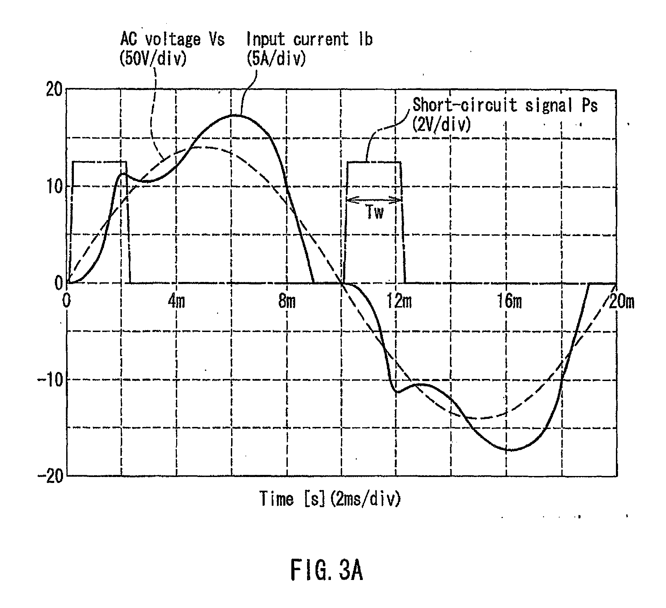

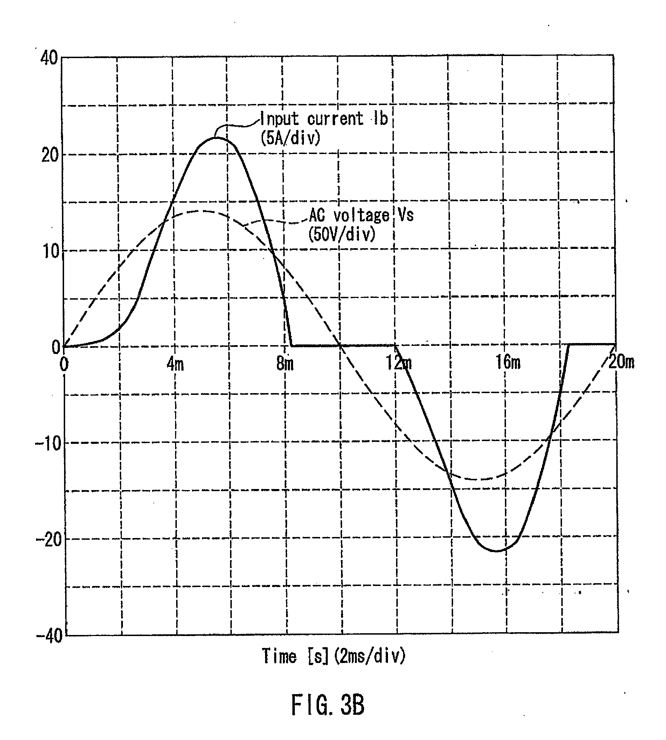

FIG. 3A illustrates a state in which an input current Ib to the full-wave rectifier circuit 37 is increased by the auxiliary input current Ia. For comparison, FIG. 3B illustrates an input current Ib to the full-wave rectifier circuit 37 in the case where the shorting circuit 33 is not operated.

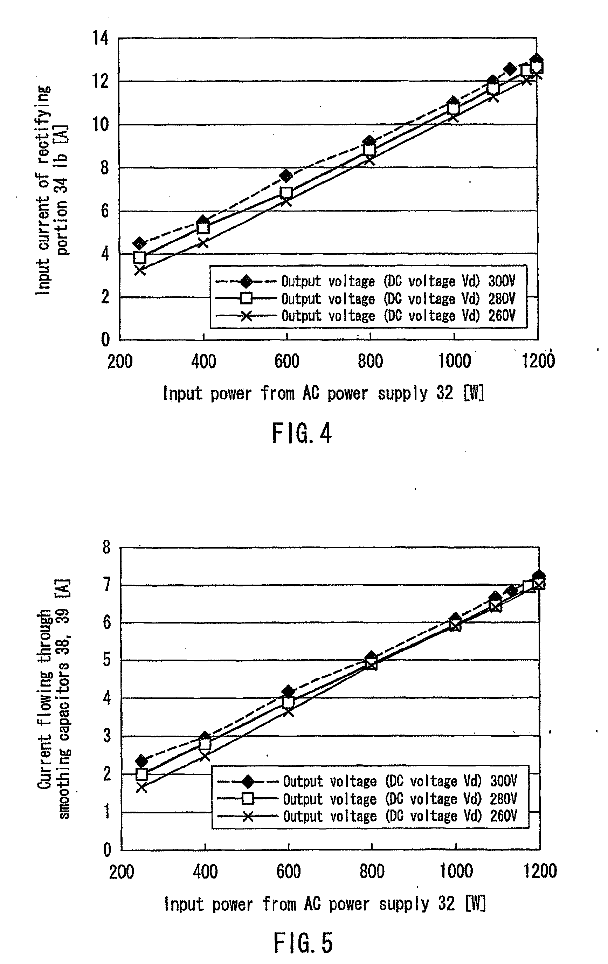

FIG. 4 illustrates the magnitude of the input current Ib of the rectifying portion 34 with respect to the input power from the AC power supply 32 for the respective cases where the DC voltage Vd that is an output voltage from the rectifying portion 34 is 260 V, 280 V, and 300 V FIG. 5 illustrates the magnitude of a current flowing through the smoothing capacitors 38, 39 with respect to input power in the same way. As is understood from these data, even with the same input power, as the DC voltage Vd is higher, the input current Ib and a current flowing through the smoothing capacitors 38, 39 increases. For example, at a time of an input power of 600 W, a current decreases more when the DC voltage Vd is stepped up to 260 V, rather than when the DC voltage Vd is stepped up to 300 V

Thus, by setting the DC voltage Vd to be an optimum voltage instead of stepping up the DC voltage Vd more than necessary, the input current Ib and a current flowing through the smoothing capacitors 38, 39 is decreased to suppress a deterioration of components even with the same input power. More specifically, it is desired to set the target voltage Vt to be an optimum target voltage Vt in accordance with each mode, instead of setting the target voltage Vt uniformly for all the modes.

The set value of the target voltage Vt for the DC voltage Vd varies depending upon the mode (process) such as washing/dehydrating (dehydrating with hot air)/drying, etc. More specifically, since power, a motor rotation speed, and a movement vary depending upon the mode, an optimum voltage and control method are selected in accordance with the mode. When the DC voltage Vd is stepped up more than necessary, power ends up being consumed wastefully, which causes heat generation and degradation of components, and necessitates it to set the withstand voltage specification of components at an excessively high level.

In the washing process, step-up control is not performed. It should be noted that slight step-up control may be performed with the pulse width Tw of the short-circuit signal Ps being constant. The reason for this is that there also is a case where a load fluctuates vigorously while the target rotation speed Nt of the drum motor 7 is low, so that it is desired to stabilize a rotation speed by performing step-up control. The pulse width Tw is set to be, for example, a certain width corresponding to a DC voltage lower than the target voltage Vt in the dehydrating process.

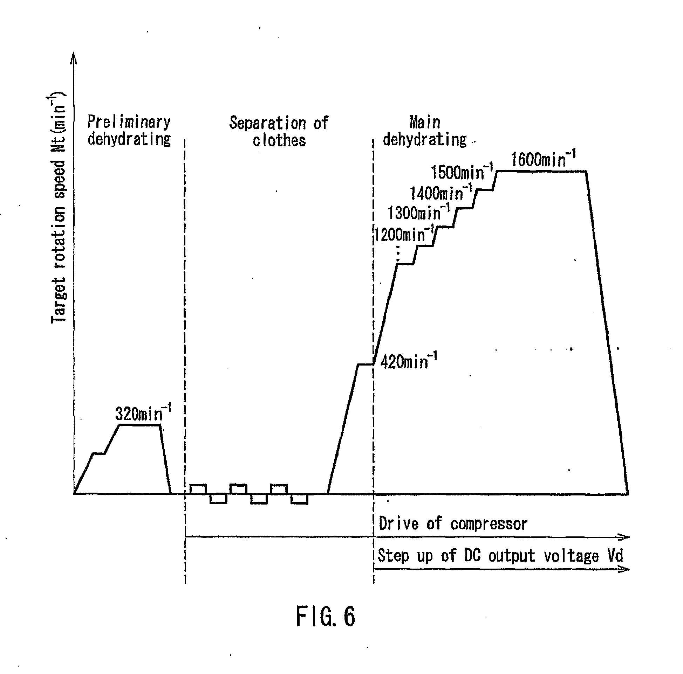

As illustrated in FIG. 6, in the dehydrating process, the step up control in accordance with the target rotation speed Nt is performed in each stage. FIG. 6 illustrates the target rotation speed Nt in each stage of the dehydrating process. A horizontal axis indicates each stage of the process, and preliminary dehydrating, separation of clothes, and main dehydrating are performed in this order. In the preliminary dehydrating, Nt is 320 min⁻¹, and the rotation speed is further lower during separation of clothes, and hence, step-up control is not required. The compressor starts being driven so as to perform a heat pump operation from the stage of separation of clothes.

In the stage of the main dehydrating, the rotation speed is stepped up gradually. In this stage, the drum motor and the compressor motor are operated in parallel, and hence, the DC voltage Vd may decrease. Thus, it is desired that a step-up operation be performed after entering the stage of the main hydrating. Therefore, the target voltage Vt stepped up in accordance with the target rotation speed Nt of the drum motor 7 is changed. For example, during a period up to the target rotation speed Nt of 420 min⁻¹, the step-up control is not performed. During a period in which the target rotation speed Nt is 420 to 1600 min⁻¹, the pulse width Tw of the short-circuit signal Ps is controlled, for example, with the target voltage Vt being, for example, 300 V The reason why the step-up control is not performed during a period up to 420 min is that a beat sound generated by the reactor is conspicuous in the state of a low rotation speed, and the necessity for step-up also is low.

In the drying process, the rotation speed of the circulation fan is enhanced by step-up. The target voltage Vt at this time is set, for example, to be about 250 V. Thus, even when a power supply decreases or a DC voltage decreases due to an increase in compressor motor, the circulation fan can be operated stably.

An example of the operation in accordance with each process is shown in Table 1 as a summary.

**[Table 1]**

| | Target rotation speed Nt (in⁻¹) | Presence/absence of step-up control | Target voltage Vt(V) | Pulse width Tw |
|---|---|---|---|---|
| Washing | | No | | |
| Preliminary dehydrating | 320 | No | | |
| Separation of clothes | less than 320 | No | | |
| Main dehydrating | less than 420 | No | | |
| | 420 or more | Yes | 300 V | Control based on Vt, Vd |
| Drying | | Yes | 250 V | Control based on Vt, Vd |

Further, when the drum motor and the compressor motor are stopped, the pulse width Tw of the short-circuit signal Ps is set to be zero to stop a step-up operation. If the step-up operation is performed when a load is light, the DC voltage Vd rises rapidly, which may have adverse effect on components.

Further, in the case where the DC voltage Vd does not reach the target voltage Vt, or the DC voltage Vd is stepped up extraordinarily to exceed the target voltage Vt, it is desired to operate the washing machine continuously by lowering the rotation speed of the compressor motor and the rotation speed for dehydrating. This is for avoiding an unexpected situation since there is a possibility that abnormality may have occurred in the operation of the control portion 30 and the like.

Further, it is desired to provide an upper limit to the pulse width Tw of the short-circuit signal Ps so as to continue step-up control without enlarging the pulse width Tw even if the target voltage Vt is not reached.

As described above, the drum type washing and drying machine of the present embodiment includes the shorting circuit 33 composed of the reactor 35 and the short-circuit control element 36, and generates a short-circuit signal for conducting the short-circuit control element 36, beginning at a zero-cross detection point of a voltage of the AC power supply 32. The pulse width Tw of the short-circuit signal is set based on the target voltage Vt of the DC voltage Vd set in accordance with the target rotation speed Nt of the drum motor 7 and the detected value of the DC voltage Vd.

Accordingly, the DC voltage Vd supplied to the inverter circuits 22, 26 can be stepped up under appropriate conditions in accordance with the status, and the drive of the drive motor 7, the fan motor for driving the circulation fan 14 and the compressor motor 20 for a heat exchange portion can be controlled stably.

### Industrial Applicability

According to the drum type washing machine of the present invention, a DC voltage can be supplied stably with respect to an inverter circuit, and thus, the present invention is useful for a washing and drying machine using a dehumidification drying system by a heat pump.

### Description of reference numerals

1 Washing machine housing
2 Water tank
3 Rotary drum
4 Clothes inlet/outlet
5 Door
6 Through-hole
7 Drum motor
8 Water supply conduit
9 Water drain conduit
10 Operation panel
11 Circulation air sending duct
12 Evaporator
13 Condenser
14 Circulation fan
15 Heat exchange portion
16 Circulating air introducing duct
17 Air sending duct
18 Filter
20 Compressor motor
21a, 21b, 21c Rotor position detecting element
22 First inverter circuit
23, 27 Switching element
24, 28 Flywheel diode
25 First drive circuit
26 Second inverter circuit
29 Second drive circuit
30 Control portion
31 Rotation speed detecting portion
32 AC power supply
33 Shorting circuit
34 Rectifying portion
35 Reactor
36 Short-circuit control element
37 Full-wave rectifier circuit
38, 39 Smoothing capacitor
40 Zero-cross detecting portion
41 DC voltage detecting portion
42 Short-circuit signal generating portion

## Claims

1. A drum type washing machine, comprising:
a rotary drum (3) having a rotary axis in a horizontal direction or an inclined direction;
a water tank (2) holding the rotary drum (3) rotatably;
a drum motor (7) rotating the rotary drum (3);
a rectifier circuit (34) rectifying an alternating current from an AC power supply (32);
a smoothing capacitor (38, 39) connected to an output terminal of the rectifier circuit (34);
a first inverter circuit (22) connected in parallel to the smoothing capacitor (38, 39), controlling driving of the drum motor (7);
a control portion (30) driving the first inverter circuit (22) and controlling a series of washing operations, wherein the control portion (30) includes a rotation speed detecting portion (31) that detects a rotation speed of the drum motor (7), and a DC voltage detecting portion (41) that detects a DC voltage (Vd) output to both ends of the smoothing capacitor (38, 39),
**characterised in that** the drum type washing machine further comprises:
a drying portion including at least a compressor, introducing air in the water tank (2) through a circulation passage (11, 16, 17) and dehumydifying and heating the air; a compressor motor (20) driving the compressor;
a second inverter circuit (26) connected in parallel to the smoothing capacitor (38, 39), controlling driving of the compressor motor (20);
a shorting circuit (33) having a reactor (35) connected in series between one end of the AC power supply (32) and one end of the rectifier circuit (34) and a short-circuit control element (36) one end of which is connected between one end of the reactor (35) and one input terminal of the rectifier circuit (34) and the other end of which is connected to the other end of the AC power supply (32); and
wherein the control portion (30) drives further the second inverter circuit (26) and includes further a zero-cross detecting portion (40) that detects a zero-cross of a voltage of the AC power supply (32), and a short-circuit signal generating portion (42) that generates a short-circuit signal for conducting the short-circuit control element (36),
the short-circuit signal generating portion (42) generates the short-circuit signal beginning at a zero-cross detection point of the AC power supply voltage at least during part of a period of a dehydrating process, and sets a pulse width (Tw) of the short-circuit signal based on a target voltage (Vt) of the DC voltage (Vd) set in accordance with a target rotation speed (Nt) of the drum motor (7) and a detected value of the DC voltage (Vd), and
the control portion (30) controls so as to operate the shorting circuit (33) to step up the DC voltage (Vd), when rotating the compressor motor (20) so as to perform a drying process.

2. The drum type washing machine according to claim 1, wherein
the control portion (30) controls so as to operate the shorting circuit (33) to step up the DC voltage (Vd), when driving the drum motor (7) and the compressor motor (20) in parallel simultaneously so as to perform an operation including the dehydrating process and the drying process.

3. The drum type washing machine according to claim 1, wherein the control portion (30) controls the pulse width (Tw) of the short-circuit signal so that the DC voltage (Vd) has a predetermined magnitude required for obtaining a target rotation speed (Nt) of the drum motor (7).

4. The drum type washing machine according to claim 1, wherein, in the dehydrating process, step-up control of the DC voltage (Vd) by the shorting circuit (33) is not performed during a period in which the target rotation speed (Nt) is equal to or lower than a predetermined speed, and the step-up control of the DC voltage (Vd) is performed during a period after the target rotation speed (Nt) exceeds the predetermined speed.

5. The drum type washing machine according to claim 1, wherein, in a washing process, the short-circuit signal is set to be a constant pulse width (Tw) corresponding to the DC voltage (Vd) lower than the target voltage (Vt) in the dehydrating process.

6. The drum type washing machine according to any one of claims 1 to 5, wherein the control portion (30) controls the pulse width (Tw) of the short-circuit signal to be zero when changing the drum motor (7) or the compressor motor (20) to a suspension state.

7. The drum type washing machine according to any one of claims 1 to 5, wherein the control portion (30) lowers the target rotation speed (Nt) of the drum motor (7) or the compressor motor (20), in a case where the DC voltage (Vd) cannot be stepped up in accordance the target voltage (Vt) or a case where the DC voltage (Vd) is stepped up to exceed the target voltage (Vt).

8. The drum type washing machine according to any one of claims 1 to 5, wherein an upper limit is provided to the pulse width (Tw) of the short-circuit signal, and the step-up control is continued by limiting the pulse width (Tw) to the upper limit or less even when the DC voltage (Vd) has not reached the target voltage (Vt).

## Patentansprüche

1. Waschmaschine vom Trommeltyp, aufweisend:
eine Drehtrommel (3), die eine Drehachse in einer horizontalen Richtung oder geneigten Richtung aufweist;
einen Wassertank (2) der die Drehtrommel (3) drehend bzw. rotierend hält;
einen Trommelmotor (7), der die Drehtrommel (3) dreht bzw. rotiert;
eine Gleichrichterschaltung (34), die einen Wechselstrom von einer AC-Stromquelle (32) gleichrichtet;
einen Glättungskondensator (38, 39), der an ein Ausgangsanschluss der Gleichrichterschaltung (34) angeschlossen ist;
eine erste Inverterschaltung (22), die parallel zu dem Glättungskondensator (38, 39) angeschlossen ist, die das Treiben des Trommelmotors (7) steuert;
einen Steuerabschnitt (30), der die erste Inverterschaltung (22) treibt und eine Serie von Waschoperationen steuert, wobei der Steuerabschnitt (30) einen Rotationsgeschwindigkeitsdetektionsabschnitt (31), der eine Rotationsgeschwindigkeit des Trommelmotors (7) detektiert, und einen DC-Spannungs-Detektionsabschnitt (41) einschließt, der eine DC-Spannungs-(Vd)-Ausgabe an beiden Enden des Glättungskondensators (38, 39) detektiert,
**dadurch gekennzeichnet, dass** die Waschmaschine vom Trommeltyp weiter aufweist:
einen Trocknungsabschnitt, der zumindest einen Kompressor einschließt, der Luft in den Wassertank (2) durch eine Zirkulationspassage (11, 16, 17) einführt und die Luft entfeuchtet und erwärmt;
einen Kompressormotor (20), der den Kompressor antreibt;
eine zweite Inverterschaltung (26), die parallel zum Glättungskondensator (38, 39) angeschlossen ist, die das Treiben des Kompressormotors (20) steuert;
eine Kurzschlussschaltung (33) mit einem Induktor bzw. einer Drossel (35), der bwz. die in Serie zwischen einem Ende der AC-Stromzufuhr (32) und einem Ende der Gleichrichterschaltung (34) angeschlossen ist, und ein Kurzschlusssteuerelement (36) wovon ein Ende davon zwischen einem Ende des Induktors bzw. der Drossel (35) und einem Eingangsanschluss der Gleichrichterschaltung (34) angeschlossen ist, und das andere Ende davon an das andere Ende der AC-Stromzufuhr (32) angeschlossen ist; und
wobei der Steuerabschnitt (30) weiter die zweite Inverterschaltung (26) treibt und weiter einen Nullkreuzungsdetektionsabschnitt (40), der einen Nullübergang bzw. Nullkreuzung einer Spannung der AC-Stromzufuhr (32) detektiert, und einen Kurzschlusssignalerzeugungsabschnitt (42) einschließt, der ein Kurzschlusssignal zum Leiten des Kurzschlusssteuerelements (36) erzeugt,
der Kurzschlusssignalerzeugungsabschnitt (42), das Kurzschlusssignal erzeugt, und zwar beginnend bei einen Nulldurchgangsdetektionspunkt bzw. einem Nullkreuzungsdetektionspunkt der AC-Stromzufuhrspannung während zumindest einem Teil einer Periode eines Dehydrierungsprozesses, und eine Pulsbreite (Tw) des Kurzschlusssignals basierend auf einer Zielspannung (Vt) der DC-Spannung (Vd), die in Übereinstimmung mit einer Zielrotationsgeschwindigkeit (Nt) des Trommelmotors (7) eingestellt bzw. gesetzt ist und einem detektierten Wert der DC-Spannung (Vd) einstellt bzw. setzt, und
der Steuerabschnitt (30) steuert, um die Kurzschlussschaltung (33) zu betreiben, um die DC-Spannung (Vd) zu erhöhen, wenn der Kompressormotor (20) rotiert bzw. dreht, um einen Trocknungsprozess durchzuführen.

2. Waschmaschine vom Trommeltyp nach Anspruch 1, wobei
der Steuerabschnitt (30) steuert, um die Kurzschlussschaltung (33) zu betreiben, um die DC-Spannung (Vd) zu erhöhen, wenn der Trommelmotor (7) und der Kompressormotor (20) gleichzeitig parallel getrieben werden, um eine Operation durchzuführen, die den Dehydrierungsprozess und den Trocknungsprozess beinhaltet.

3. Waschmaschine vom Trommeltyp nach Anspruch 1, wobei der Steuerabschnitt (30) die Pulsbreite (Tw) des Kurzschlusssignals steuert, so dass die DC-Spannung (Vd) eine vorbestimmte Magnitude bzw. Größe aufweist, die erforderlich ist, um eine Zielrotationsgeschwindigkeit (Nt) des Trommelmotors (7) zu erhalten.

4. Waschmaschine vom Trommeltyp nach Anspruch 1, wobei in dem Dehydrierungsprozess eine Erhöhungssteuerung der DC-Spannung (Vd) durch die Kurzschlussschaltung (33) nicht während einer Periode durchgeführt wird, in welcher die Zielrotationsgeschwindigkeit (Nt) gleich oder kleiner ist als eine vorbestimmte Geschwindigkeit, und die Erhöhungssteuerung der DC-Spannung (Vd) während einer Periode durchgeführt wird, nachdem die Zielrotationsgeschwindigkeit (Nt) die vorbestimmte Geschwindigkeit überschreitet.

5. Waschmaschine vom Trommeltyp nach Anspruch 1, wobei bei einem Waschprozess das Kurzschlusssignal eingestellt ist, eine konstante Pulsbreite (Tw) zu sein, die zu der DC-Spannung (Vd) korrespondiert, die niedriger ist als die Zielspannung (Vt) in dem Dehydrierungsprozess.

6. Waschmaschine vom Trommeltyp nach irgendeinem der Ansprüche 1 bis 5, wobei der Steuerabschnitt (30) die Pulsbreite (Tw) des Kurzschlusssignals steuert, null zu sein, wenn der Trommelmotor (7) oder der Kompressormotor (20) zu einem Stilllegungszustand bzw. Ruhezustand wechseln.

7. Waschmaschine vom Trommeltyp nach irgendeinem der Ansprüche 1 bis 5, wobei der Steuerabschnitt (30) die Zielrotationsgeschwindigkeit (Nt) des Trommelmotors (7) oder des Kompressormotors (20) verringert, und zwar in einem Fall, wo die DC-Spannung (Vd) nicht in Übereinstimmung mit der Zielspannung (Vt) erhöht werden kann, oder einem Fall wo die DC-Spannung (Vd) erhöht ist, um die Zielspannung (Vt) zu überschreiten.

8. Waschmaschine vom Trommeltyp nach irgendeinem der Ansprüche 1 bis 5, wobei eine obere Grenze zu der Pulsbreite (Tw) des Kurzschlusssignals bereitgestellt ist, und die Erhöhungssteuerung weiter durchgeführt wird, indem die Pulsbreite (Tw) auf die obere Grenze oder weniger begrenzt wird, wenn die DC-Spannung (Vd) die Zielspannung (Vt) nicht erreicht hat.

## Revendications

1. Lave-linge à tambour comprenant :
un tambour rotatif (3) ayant un axe rotatif dans une direction horizontale ou une direction inclinée ;
une cuve à eau (2) supportant le tambour rotatif libre en rotation ;
un moteur de tambour (7) faisant tourner le tambour rotatif (3) ;
un circuit redresseur (34) convertissant un courant alternatif provenant d'une alimentation en courant alternatif (32) ;
un condensateur de filtrage (38, 39) connecté à une borne de sortie du circuit de redresseur (34) ;
un premier circuit d'onduleur (22) connecté en parallèle au condensateur de filtrage (38, 39) qui contrôle l'entraînement du moteur de tambour (7) ;
une section de contrôle (30) actionnant le premier circuit d'onduleur (22) et contrôlant une série d'opérations de lavage, où la section de contrôle (30) comporte une section de détection d'une vitesse de rotation (31) qui détecte une vitesse de rotation du moteur de tambour (7) et une section de détection d'une tension de courant continu (41) qui détecte une tension de courant continu (Vd) de sortie aux deux extrémités du condensateur de filtrage (38, 39), **caractérisé en ce que** le lave-linge à tambour comprends en outre :
une section de séchage comportant au moins un compresseur introduisant de l'air dans la cuve à eau (2) à travers un passage de circulation (11, 16, 17) et déshumidifiant et chauffant l'air ;
un moteur de compresseur (20) entraînant le compresseur ;
un deuxième circuit d'onduleur (26) connecté en parallèle au condensateur de filtrage (38, 39) qui contrôle l'entraînement du moteur du compresseur (20) ;
un court-circuit (33) ayant un réacteur (35) connecté en série entre une extrémité de l'alimentation en courant alternatif (32) et une extrémité du circuit redresseur (34) et un élément de contrôle de court-circuit (36) dont une extrémité est connectée entre une extrémité du réacteur (35) et une borne d'entrée du circuit redresseur (34) et dont l'autre extrémité est connectée à l'autre extrémité de l'alimentation de courant alternatif (32) ; et
où la section de contrôle (30) actionne en outre le deuxième circuit d'onduleur (26) et comporte en outre une section de détection d'un passage par zéro (40) qui détecte un passage par zéro d'une tension de l'alimentation en courant alternatif (32), et une section de génération d'un signal de court-circuit (42) qui génère un signal de court-circuit pour conduire l'élément de contrôle de court-circuit (36),
la section de génération d'un signal de court-circuit (42) commence à générer le signal de court-circuit lors de la détection d'un passage par zéro de la tension de l'alimentation en courant alternatif au moins durant une partie d'une période d'un processus de déshydratation et définit une largeur d'impulsion (Tw) du signal de court-circuit sur la base d'une tension cible (Vt) de la tension de courant continu (Vd) fixée selon une vitesse de rotation cible (Nt) du moteur de tambour (7) et une valeur détectée de la tension de courant continu (Vd), et
la section de contrôle (30) contrôle le fonctionnement du court-circuit (33) afin d'augmenter la tension de courant continu (Vd) lors de la rotation du moteur de compresseur (20) afin de mettre en oeuvre un processus de séchage.

2. Lave-linge à tambour selon la revendication 1, où
la section de contrôle (30) contrôle le fonctionnement du court-circuit (33) pour augmenter la tension de courant continu (Vd) lors de l'entraînement simultané et en parallèle du moteur de tambour (7) et du moteur de compresseur (20) afin de réaliser une opération comprenant le processus de déshydratation et le processus de séchage.

3. Lave-linge à tambour selon la revendication 1, où la section de contrôle (30) contrôle la largeur d'impulsion (Tw) du signal de court-circuit, de sorte que la tension de courant continu (Vd) a une valeur prédéterminée nécessaire à l'obtention d'une vitesse de rotation cible (Nt) du moteur de tambour (7).

4. Lave-linge à tambour selon la revendication 1, où lors du processus de déshydratation, le contrôle de l'augmentation de la tension de courant continu (Vd) par le court-circuit (33) n'est pas mis en oeuvre durant une période pendant laquelle la vitesse de rotation cible (Nt) est égale ou inférieure à une vitesse prédéterminée, et le contrôle de l'augmentation de la tension de courant continu (Vd) est mis en oeuvre après que la vitesse de rotation cible (Nt) aie dépassé la vitesse prédéterminée.

5. Lave-linge à tambour selon la revendication 1, où durant un processus de lavage, le signal de court-circuit a une largeur d'impulsion (Tw) constante correspondant à la tension de courant continu (Vd) inférieure à la tension cible (Vt) au cours du processus de déshydratation.

6. Lave-linge à tambour selon l'une quelconque des revendications 1 à 5, où la section de contrôle (30) contrôle la largeur d'impulsion (Tw) du signal de court-circuit de manière à ce qu'elle soit égale à zéro lors du passage du moteur de tambour (7) ou du moteur de compresseur (20) a un état de suspension.

7. Lave-linge à tambour selon l'une quelconque des revendications 1 à 5, où lorsque la tension de courant continu (Vd) ne peut pas être augmentée en fonction de la tension cible (Vt) ou lorsque la tension de courant continu (Vd) est augmentée de manière à dépasser la tension cible (Vt), la section de contrôle (30) réduit la vitesse de rotation cible (Nt) du moteur de tambour (7) ou du moteur de compresseur (20).

8. Lave-linge à tambour selon l'une quelconque des revendications 1 à 5, où la largeur d'impulsion (Tw) du signal de court-circuit a une limite supérieure et où le contrôle de l'augmentation se poursuit par la limitation de la largeur d'impulsion (Tw) à la limite supérieure ou moins, même lorsque la tension de courant continu (Vd) n'a pas atteint la tension cible (Vt).
